# EUROPEAN PATENT APPLICATION

(11) **EP 0 550 072 A2**
(43) Date of publication of application: **07.07.1993**
(21) Application number: 92122155.2
(22) Date of filing: 30.12.1992
(51) Int. Cl.: B65D 19/28, B65D 19/08

(54) **Metallic transporting board**

(30) Priority: 30.12.1991 JP 113686/91 U
(71) Applicant: IWAOKA KOSAKUSHO CO., LTD., Yokohama-shi, Kanagawa-ken (JP)
(72) Inventor: Iwaoka, Toshiaki, c/o Iwaoka Kosakusho Co., Ltd., Yokohama-shi, Kanagawa-ken, 221 (JP); Yamauchi, Hikari, c/o Iwaoka Kosakusho Co., Ltd., Yokohama-shi, Kanagawa-ken, 221 (JP); Katumi, Yamagischi, c/o Iwaoka Kosakusho Co., Ltd., Yokohama-shi, Kanagawa-ken, 221 (JP)
(74) Representative: TER MEER - MÜLLER - STEINMEISTER & PARTNER

(57) **Abstract**

Disclosed is a metallic transporting appliance, such as a flat pallet, a skid or a box pallet, designed in such a way that a thin metal plate is used entirely for the former two and for the side wall of the box pallet and the thin metal plate is subjected to special burring so as to have a sufficient durability, thereby contributing to the reduction of the amount of wood for conventionally popular wooden pallets in order to preserve natural resources. The metallic transporting appliance comprises a main plate (1) made from a thin metal plate having plural pairs of bores (2, 2) each formed at a predetermined interval (L) therebetween in a flat surface thereof, with a slit (3) formed between each pair of bores (2, 2) to couple the bore pair. The main plate (1) has a plurality of elongated hole portions (4) each having a bottom hole (6) with a flange (5) provided by burring those portions where the bore pairs are coupled with the associated slits. This main plate is adapted for the deck board of a skid. In the above metallic transporting appliance, lengthwise extending portions (1₁) of the main plate are bent downward and then bent inward toward each other with a predetermined thickness, both end portions (1₂, 1₂)) are joined at a center portion, and the flanges (5) of the elongated hole portions are welded to the extending portion by spot welding. This main plate is adapted for the deck board of a flat pallet or the side plate (12) of a box pallet.

## Description

The present invention relates to metallic transporting appliances contributable to the reduction of the amount of wood used in currently very popular wooden pallets for transportation usage in order to preserve natural resources.

### Description of the Related Art

Of the conventional metallic transporting appliances of this kind, pallets, such as flat pallets, skids or box pallets, made of wood are popular because of their being easier to be scrapped and inexpensive to manufacture as well as the wooden pallets being less expensive and lighter than metallic or plastic pallets. The wood for the pallets need not have very high quality, thinnings such as lauan and larch are used as the materials.

The wood used in the conventional transporting pallet appliances is short in supply in Japan, and a regular large demand even of thinnings cannot be met fully, so that the manufacturers are currently dependent on importing. In this respect, metallic and plastic pallets have still been produced. The former pallets are assembled with arc welding on thick steel plates or by fastening them with bolts. The latter are produced by a large injection molding machine using a large amount of a molding material, making the cost significantly high. In addition, users are likely to have trouble in discarding the plastic pellets.

It is therefore an object of the present invention to provide a metallic transporting appliance, such as a flat pallet, a skid or a box pallet, designed in such a way that a thin metal plate is used entirely for the former two and for the side wall of the box pallet and the thin metal plate is subjected to special burring so as to have a sufficient durability, thereby contributing to the reduction of the amount of wood for conventionally popular wooden pallets in order to preserve natural resources.

To achieve the object and overcome the conventional problems, according to the present invention, a metallic transporting appliance is provided which comprises a main plate made from a thin metal plate having plural pairs of bores each formed at a predetermined interval therebetween in a flat surface thereof, with a slit formed between each pair of bores to couple the bore pair, the main plate having a plurality of elongated hole portions each having a bottom hole with a flange provided by burring those portions where the bore pairs are coupled with the associated slits.

According to the second aspect of this invention, lengthwise extending portions of the main plate of the metallic transporting appliance of the first aspect are bent downward and then bent inward toward each other with a predetermined thickness, both end portions are joined at a center portion, and the flanges of the elongated hole portions are welded to the extending portion by spot welding.

According to the third aspect of this invention, the main plate of the metallic transporting appliance of the first aspect constitutes a flat pallet type deck board, a link portion is defined at a predetermined interval by each lengthwisely adjoining pair of elongated hole portions in a unit row, so as to be integral with another link portion defined at a predetermined interval by widthwisely adjoining unit rows of elongated hole portions, lengthwise extending portions of the main plate are bent downward and then bent inward toward each other with a predetermined thickness, both end portions are joined at a center portion, and the flanges of the elongated hole portions are welded to the extending portion by spot welding.

According to the fourth aspect of this invention, the main plate of the metallic transporting appliance of the first aspect constitutes a deck board of a skid type, the elongated hole portions are arranged radially on the main plate, a link portion is defined at a predetermined interval by each lengthwisely adjoining pair of elongated hole portions in a unit row, so as to be integral with another link portion defined at a predetermined interval by widthwisely adjoining unit rows of elongated hole portions, a reinforcing plate is placed under the back of the main plate, the flanges of the elongated hole portions are welded to the reinforcing plate by spot welding, holes are made in four corners and a center portion of the deck board and center portions of individual sides of the deck board between the associated corners, restrictions are formed in four corners of the reinforcing plate, hat-shaped legs are fitted into the restrictions, flanges of the legs are welded to the holes of the deck board by spot welding, and the periphery of the deck board is curled downward to form a curl portion to hold the flanges of the legs.

According to the fifth aspect of this invention, the main plate of the metallic transporting appliance of the first aspect constitutes a side plate of a box pallet assembled by connecting the side plate to each peripheral edge of a deck board, plural rows of elongated hole portions are arranged on the main plate as the side plate of the box pallet, a link portion is defined at a predetermined interval by each lengthwisely adjoining pair of elongated hole portions in a unit row, so as to be integral with another link portion defined at a predetermined interval by widthwisely adjoining unit rows of elongated hole portions, lengthwise extending portions of the main plate are bent downward and then bent inward toward each other with a predetermined thickness, both end portions are joined at a center portion, and the flanges of the elongated hole portions are welded to the extending portion by spot welding.

According to the sixth aspect of this invention, the main plate of the metallic transporting appliance of the first aspect and a reinforcing plate constitute a deck board of a skid type, plural rows of elongated hole portions are provided in the main plate, plural rows of elongated hole portions are provided in the reinforcing plate in a direction perpendicular to the plural rows of elongated hole portions of the main plate, and the flanges of the elongated hole portions of the main plate are welded to the facing reinforcing plate by spot welding.
Fig. 1 is a plan view of a main plate made from a thin metal plate and having elongated hole portions formed therein by burring for use in a metallic transporting appliance according to the present invention;
Fig. 2 is a cross section taken along the line 2-2 in Fig. 1;
Fig. 3 is a cross section taken along the line 3-3 in Fig. 1;
Fig. 4 is a lateral cross section of burring portions of a board having the main plate in Figs. 1 to 3 formed with a predetermined thickness;
Fig. 5 is a plan view of a metallic flat pallet to which the board shown in Figs. 1 to 4 after burring is adapted;
Fig. 6 is an enlarged view showing part of Fig. 5;
Fig. 7 is a cross section taken along the line 7-7 in Fig. 6;
Fig. 8 is a cross section taken along the line 8-8 in Fig. 6;
Fig. 9 is a plan view of a metallic skid to which a main plate after burring is adapted;
Fig. 10 is a front view of Fig. 8;
Fig. 11 is an enlarged plan view showing part of Fig. 9;
Fig. 12 is a cross section taken along the line 12-12 in Fig. 11;
Fig. 13 is a front view of a side plate for a box pallet to which a board after burring is adapted;
Fig. 14 is a plan view of Fig. 13;
Fig. 15 is an enlarged cross section taken along the line 15-15 in Fig. 13;
Fig. 16 is a plan view showing another example of the skid type shown in Figs. 9 to 12;
Fig. 17 is a bottom view of Fig. 16;
Fig. 18 is a front view of Fig. 16;
Fig. 19 is an enlarged plan view showing part of Fig. 16; and
Fig. 20 is a cross section taken along the line 20-20 in Fig. 19.

Preferred embodiments of the present invention will now be described referring to the accompanying drawings.

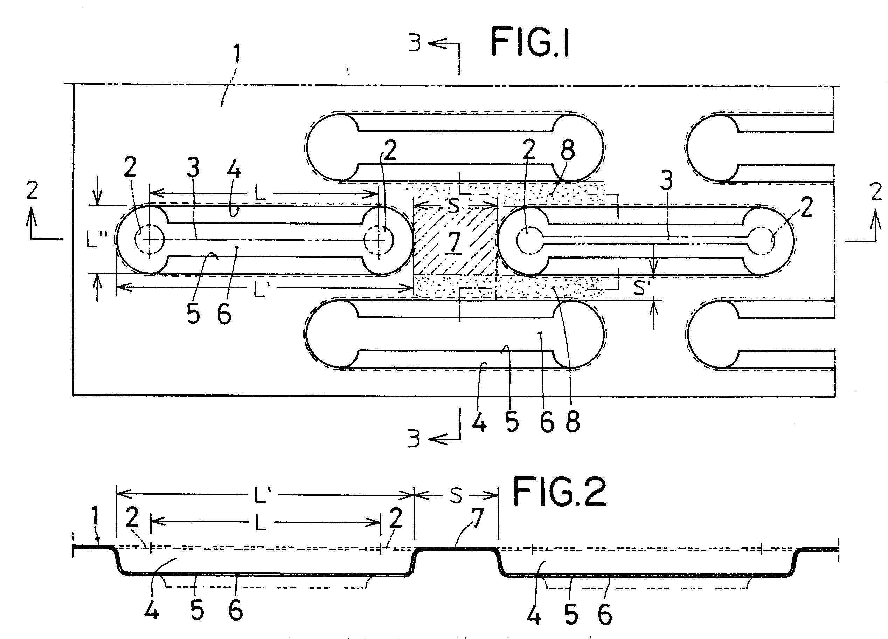

Figs. 1 through 4 illustrate main plate to be adapted for a metallic transporting appliance and a board comprising the main plate according to a first embodiment. The first embodiment is constituted as follows.

A main plate 1 is made from a thin metal plate of soft steel, aluminum alloy or the like, with an arbitrary thickness. In the case of Figs. 1 to 4, the allowable ratio of the long diameter to the short diameter ranges from about 4 : 1 to 5 : 1, and the diameter of a bore is set to 20 mm while the short diameter L'' is set to 35 mm for the long diameter L' of 150 mm. When plural rows of the elongated hole portions are provided, any two elongated hole portions 4 of a unit row adjoining lengthwise define a link portion 7, the distance S of this link portion 7 is set approximately the same as the mentioned short diameter L'', and any elongated hole portion in a unit row and part of an associated elongated hole portion of an adjoining unit row define a link portion 8 whose distance S' is set approximately 1/3 of the short diameter L''.

Lengthwise extending portions 1₁ of the main plate 1 are bent with a predetermined thickness t and are then bent inwardly toward each other, constituting a board. As a flat pallet or a deck board of a skid normally has a thickness t of about 20 mm, the elongated holes 4 in this case are formed in accordance with the thickness t of the board. Flanges 5 of the elongated hole portions 4 are securely welded to the extending portions 1₁ (see W).

The elongated hole portions 4 are formed through burring. The "burring" is a hole-flange process which generally forms a cylindrical shape with a cylindrical male and its mating female using the circumferential stretching of a single complete circle. Drawing using the burring is also known. In this embodiment, a slit 3 is formed between bores 2 which are formed with a distance of L between their centers, and the resultant structure is then subjected to burring, forming a flange 5 around a bottom hole 6 or at least at a long side portion.

The main plate 1 made from a thin metal plate is provided with plural rows of elongated hole portions 4 in such a way that the link portion 7 of the lengthwisely adjoining elongated hole portions 4 of one row, which has a predetermined interval S, is formed integral with the link portion 8 of parts of the two subsequence elongated hole portions 4 of another row adjoining to that row with a predetermined interval S' therebetween.

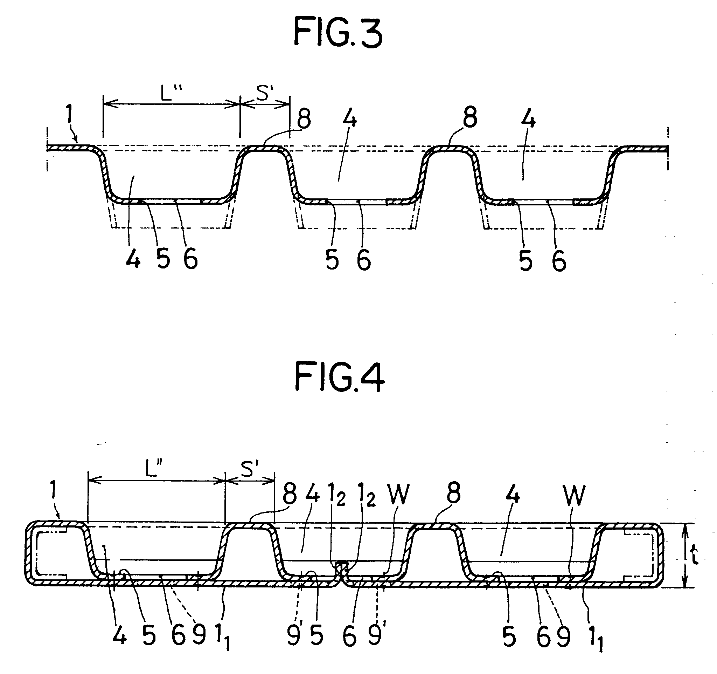

In Fig. 4, the lengthwise extending portions 1₁ of the main plate 1 in Fig. 1 are bent downward and then bent inwardly toward each other with a predetermined thickness t, and both end portions I₂ are connected at the center portion, constituting a board.

The flanges 5 of the elongated hole portions are secured at several points (W) to the extending portions I₁ by spot welding.

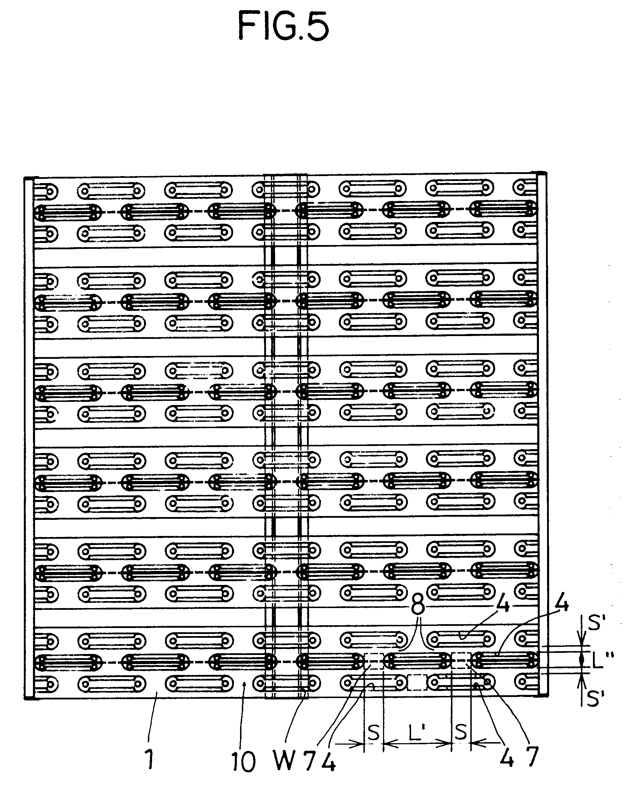

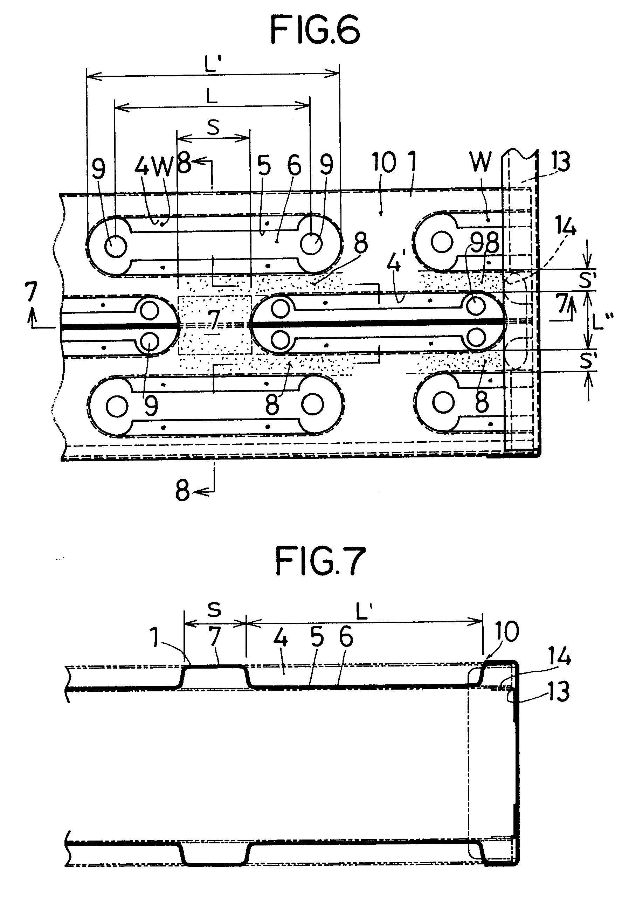

Figs. 5 through 8 illustrate a flat pallet constituted by a board, which is acquired by forming a plurality of elongated holes 4 in the main plate 1 made from a thin metal plate as shown in Figs. 1 to 4. A deck board 10 is constituted by arranging a plurality of such boards. The board is constituted by folding the lengthwise extending portions 1₁ of the main plate 1 provided with the elongated holes 4 inward, connecting both end portions I₂ at the center portion, and fixing the flanges 5 of the elongated hole portions to the extending portions I₁ by spot welding (see W).

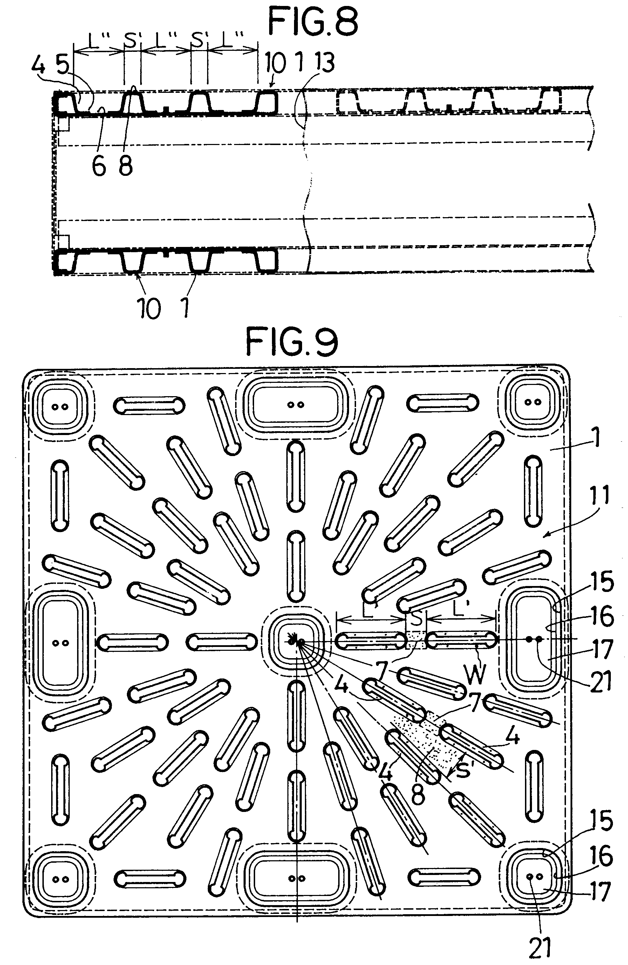

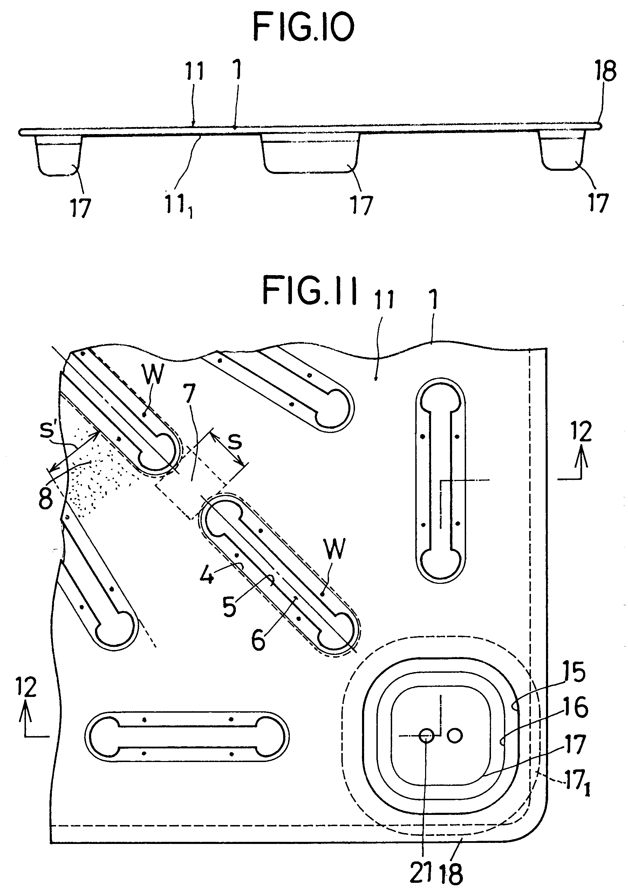

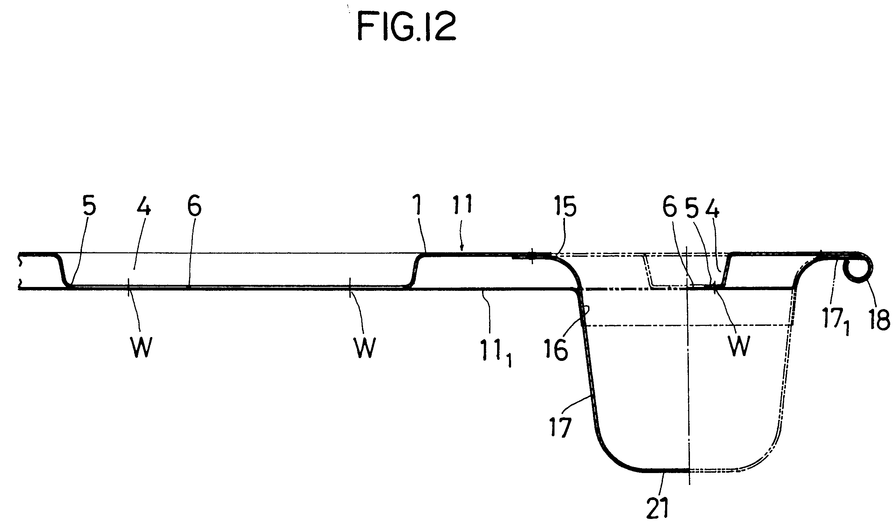

Figs. 9 through 12 illustrate a skid comprising a deck board constituted of the main plate 1, which is made from a thin metal plate as shown in Figs. 1 to 3 and has elongated hole portions formed radially therein. An reinforcing plate 11₁ is placed at the bottom of the main plate 1. The elongated hole portions 4 with flanges are formed radially from the center portion of the deck board 11. The flanges 5 of the elongated hole portions are fixed to the reinforcing plate 11₁ by spot welding (see W).

Further, holes 15 are made in the four corners and the center portion of the deck board 11 and center portions of the individual sides of the deck board between the associated corners, restrictions 15₁ are formed in the four corners of the reinforcing plate 11₁, hat-shaped legs 17 are fitted into the restrictions 15₁, and flanges 17₁ of the legs are welded to the holes 15 of the deck board by spot welding. The periphery of the deck board 11 is curled downward to form a curl portion 18 that holds the flanges 17₁ of the legs 17. In the diagrams, reference numeral "21" denotes a drain hole formed in each leg 17.

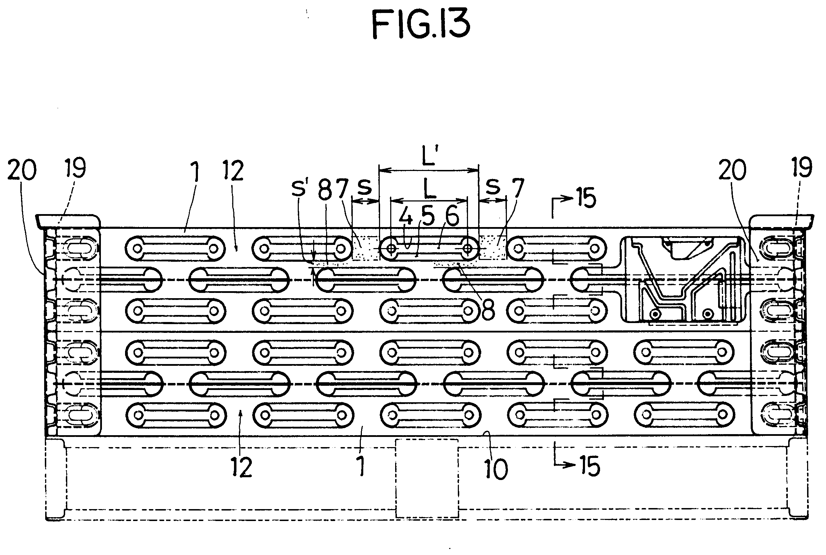

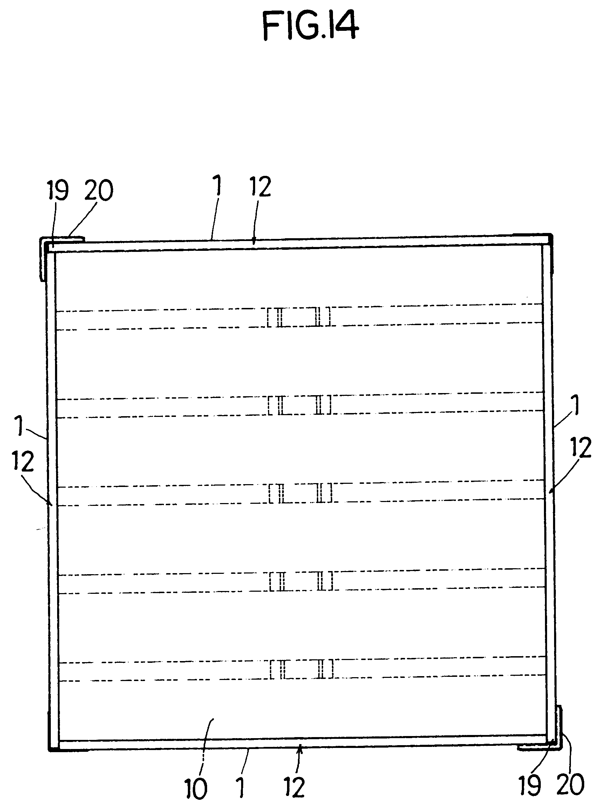

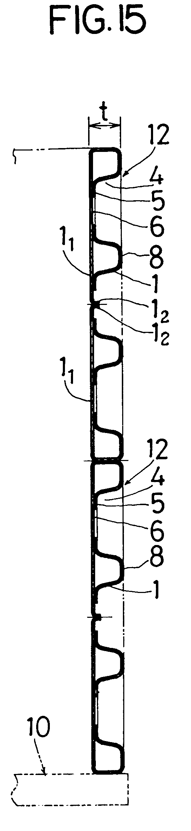

Figs. 13 to 15 illustrates a box pallet to which the board shown in Figs. 1-4 is adapted. A side plate 12 has two plates stuck one on the other in the height direction, and a single row of elongated hole portions 4 and plural rows of elongated hole portions 4 are formed in that side plate.

The lengthwise extending portions 1₁ of the main plate 1 made from a thin metal plate are bent downward and then bent inwardly toward each other with a predetermined thickness t, both end portions I₂ are connected at the center portion, constituting a board, and the flanges 5 of the elongated hole portions are secured at several points (W) to the extending portions I₁ by spot welding.

A pair of diagonally opposite corners of the box pallet at the top are provided with legs 20 having receiving portions 19 for receiving another box pallet.

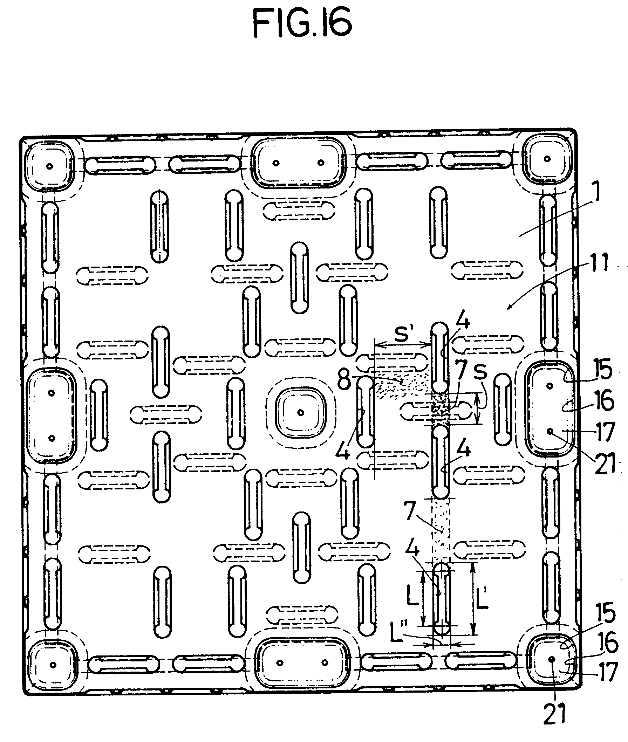

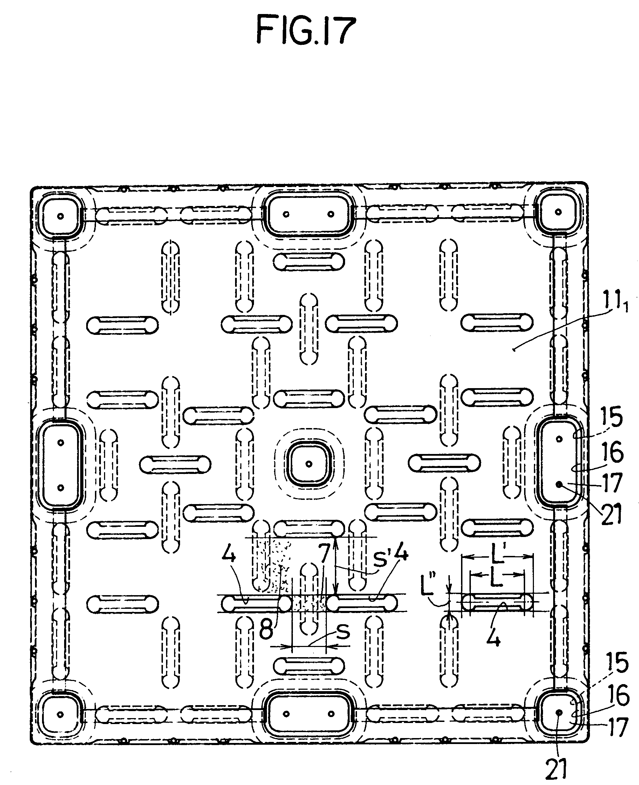

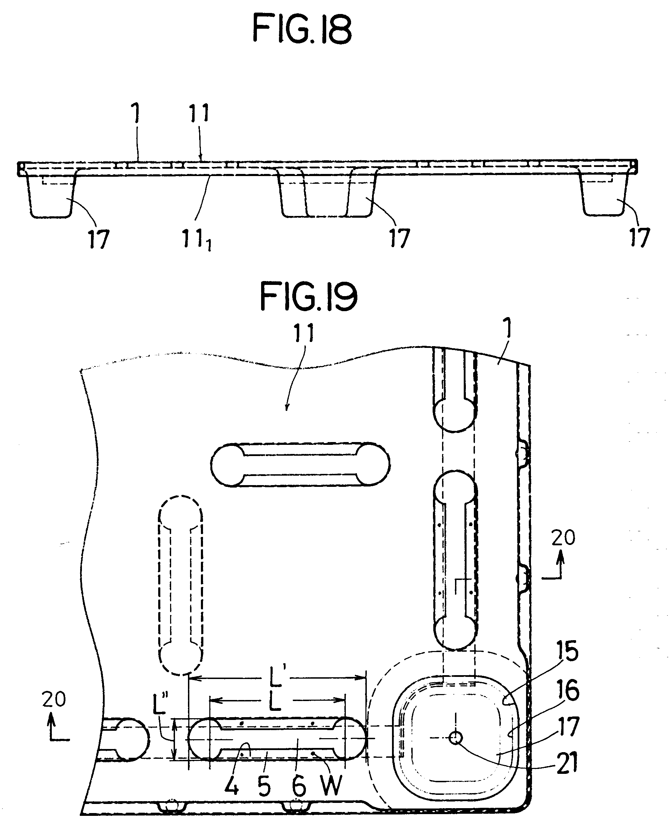

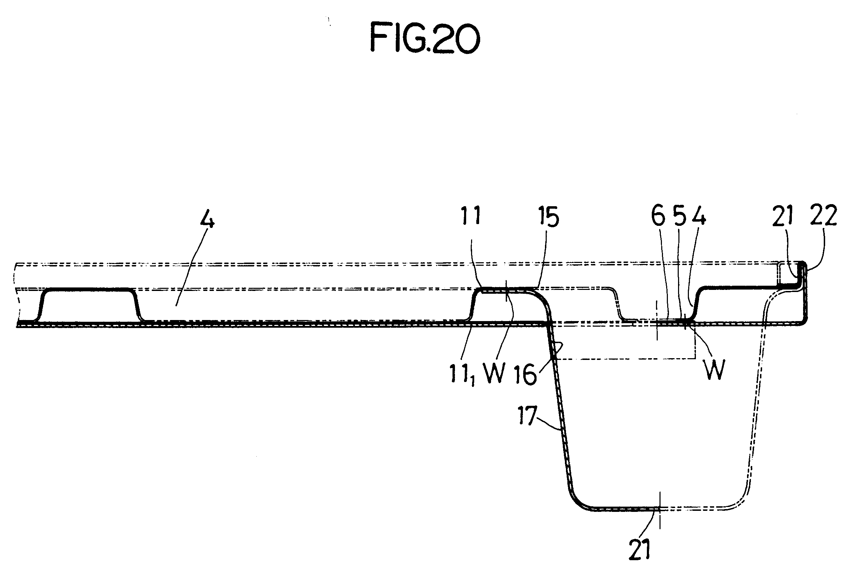

Figs. 16 to 20 illustrate another example of the skid shown in Figs. 9-12. The deck board 11 comprises the main plate 1 and the reinforcing plate 11₁. Plural rows of elongated hole portions 4 are provided in the main plate 1, plural rows of elongated hole portions 4 are provided in the reinforcing plate 11₁ in a direction perpendicular to the plural rows of elongated hole portions 4 of the main plate, and the flanges 5 of the elongated hole portions of the main plate 1 are fixed to the facing reinforcing plate 11₁ by spot welding (see W).

The holes 15 are made in the four corners and the center portion of the deck board and center portions of individual sides of the deck board between the associated corners through burring, restrictions 15₁ are formed in the four corners of the reinforcing plate 11₁, hat-shaped legs 17 are fitted into the restrictions, and the flanges of the legs 17 are welded to the peripheral portions of the holes 15 of the deck board by spot welding. The periphery of the deck board is bent upward to form projections 21 and 22 that hold the flanges of the legs.

Specific manufacturing processes according to the present invention will now be described referring to Figs. 1 through 4. First, plural pairs of bores 2 are each formed at a predetermined interval L therebetween in the flat surface of the main plate 1 made from a thin metal plate which constitutes the essential portion of an assembly of a metallic transporting appliance. Next, the slit 3 is formed between each pair of bores 2 to couple the bore pair. Then, the regions around and between both bores 2 are subjected to burring to provide elongated hole portions, and at the time of forming those hole portions, the flange 5 is formed around or part (long side portion) of each relatively shallow bottom hole. This flange forms a shallow bottom.

Plural rows of the elongated hole portions 4 are arranged in the main plate 1, the link portion 7 with a predetermined interval S between each lengthwisely adjoining pair of elongated hole portions in a unit row is so formed as to be integral with another link portion 8 with a predetermined interval S' defined between parts of the elongated hole portions of a widthwisely adjoining unit row.

The main plate 1 shown in Figs. 1 to 3 is adapted for use in a skid having the elongated hole portions 4 arranged radially as shown in Figs. 9 to 12, or a skid having the elongated hole portions 4 arranged in plural rows as shown in figs. 16 to 20. In this case, the reinforcing plate 11₁ is placed at the bottom of the deck board 11 constituted of that main plate, and the flanges 5 of the elongated hole portions are fixed to the reinforcing plate by spot welding (see W).

Further, in Fig. 4, the lengthwise extending portions 1₁ of the main plate 1 shown in Figs. 1 to 3 are bent downward and then bent inwardly toward each other with a predetermined thickness t, both end portions I₂ are connected at the center portion, the flanges 5 of the elongated hole portions are secured at to the extending portions I₁ by spot welding (see W), thus constituting a board, and plural rows of the boards are arranged as shown in Figs. 5-7 and 13-15 to constitute the deck board 10 of a flat pallet or a side plate 12 of a box pallet.

With the above-described structure, according to the first aspect of the present invention, the main plate is made from a thin metal plate, so that even when it is applied to any type of pallets, a skid or other metallic transporting appliances, the strength of the main plate though light is increased to provide higher durability. further, the height of the elongated hole portions of the yielded board can be set to the proper thickness, for example, about 10 to 30 mm.

The board is reinforced by multiple elongated hole portions provided in the main plate, and the reinforcement is further improved by the flanges formed in the bottom holes. Further, in the case of a flat pallet, the board can be stably mounted and coupled to the beams. Furthermore, the link portion between the lengthwisely adjoining elongated holes 4 of one row is so formed as to be integral with the two subsequence elongated holes of another row adjoining to that row. Although the elongated hole portions occupy more than a half of the area of the thin metal plate, therefore, the board has a sufficient strength against a load applied to the loading surface or the side wall.

In addition, as no wood is used, this board is expected to contribute to preservation of natural resources.

According to the second aspect of this invention, the lengthwise extending portions of the main plate of the first aspect are bend downward and then bent inward toward each other at a predetermined thickness, and both end portions are coupled at the center, yielding a board with an arbitrary thickness and improved strength.

In a flat pallet according to the third aspect of this invention, the board constituted of the main plate of the first aspect or the second aspect is adapted for the deck board, so that the elongated hole portions occupy more than a half of the area of the thin metal plate, contributing to considerable reduction of the weight. Further, the link portion between the lengthwisely adjoining elongated holes of one row is so formed as to be integral with the two subsequence elongated holes of another row adjoining to that row, so that the board has a sufficient strength against a live load, and those portions which become locally weak against a load can be reinforced to provide a higher strength.

As clearance grooves are formed at the portions of beams which support the deck board at the time of assembling the deck board to the beams, welding chips for a spot welding machine can be easily inserted, thus eliminating the need for bolt fastening, arc welding or the like, so that a very neat and smart flat pallet can be acquired.

In a skid according to the fourth aspect of this invention, the elongated hole portions are formed radially in the deck board, a link portion is defined at a predetermined interval by each lengthwisely adjoining pair of elongated hole portions in a unit row, so as to be integral with another link portion defined at a predetermined interval by widthwisely adjoining unit rows of elongated hole portions. Therefore, as per the effect of the third aspect, the elongated hole portions occupy more than a half the loading surface, contributing to considerable reduction of the weight, and the link portion between the lengthwisely adjoining elongated holes of one row is so formed as to be integral with the two subsequence elongated holes of another row adjoining to that row, so that the board has a sufficient strength against a live load. Further, a reinforcing plate is placed at those portions which become locally weak against a load and the flanges of the elongated hole portions are welded to the reinforcing plate by spot welding, the board is sufficiently reinforced to provide a higher strength.

In the frame of a box pallet according to the fifth aspect of this invention, the boards of the first aspect and second aspect are adapted for the side plate of the box pallet, a unit board can be constituted of a main plate made from a single thin metal plate. The weight is reduced by the elongated hole portions. As flanges are formed in the elongated hole portions, and the link portion between the lengthwisely adjoining elongated holes of one row is so formed as to be integral with the two subsequence elongated holes of another row adjoining to that row, so that the reinforcement is improved to provide higher durability.

In a skid according to the sixth aspect of this invention, the deck board is constituted of the main plate and the reinforcing plate, plural rows of elongated hole portions are provided in the main plate, plural rows of elongated hole portions are provided in the reinforcing plate in a direction perpendicular to the plural rows of elongated hole portions of the main plate, and the flanges of the elongated hole portions of the main plate are welded to the facing reinforcing plate by spot welding. Therefore, as per the effect of the third aspect, the elongated hole portions occupy more than a half the loading surface, contributing to considerable reduction of the weight, and the link portion between the lengthwisely adjoining elongated holes of one row is so formed as to be integral with the two subsequence elongated holes of another row adjoining to that row, so that the board has a sufficient strength against a live load. Further, a reinforcing plate is placed at those portions which become locally weak against a load and the flanges of the elongated hole portions are welded to the reinforcing plate by spot welding, the board is sufficiently reinforced to provide a higher strength.

## Claims

1. A metallic transporting appliance comprising:
a main plate (1) made from a thin metal plate having plural pairs of bores (2, 2) each formed at a predetermined interval (L) therebetween in a flat surface thereof, with a slit (3) formed between each pair of bores to couple said bore pair, said main plate having a plurality of elongated hole portions (4) each having a bottom hole (6) with a flange (5) provided by burring those portions where said bore pairs are coupled with the associated slits.

2. The metallic transporting appliance according to claim 1, wherein lengthwise extending portions (1₁) of said main plate (1) are bent downward and then bent inward toward each other with a predetermined thickness (t), both end portions (1₂, 1₂) are joined at a center portion, and said flanges (5) of said elongated hole portions are welded to said extending portion (1₁) by spot welding.

3. The metallic transporting appliance according to claim 1, wherein said main plate (1) constitutes a flat pallet type deck board (10), a link portion (7) is defined at a predetermined interval (S) by each lengthwisely adjoining pair of elongated hole portions (4, 4) in a unit row, so as to be integral with another link portion (8) defined at a predetermined interval (S') by widthwisely adjoining unit rows of elongated hole portions (4), lengthwise extending portions (11) of said main plate are bent downward and then bent inward toward each other with a predetermined thickness (t), both end portions (1₂, 1₂) are joined at a center portion, and said flanges (5) of said elongated hole portions are welded to said extending portion (1₁) by spot welding.

4. The metallic transporting appliance according to claim 1, wherein said main plate (1) constitutes a deck board (11) of a skid type, said elongated hole portions (4) are arranged radially on said main plate, a link portion (7) is defined at a predetermined interval (S) by each lengthwisely adjoining pair of elongated hole portions (4, 4) in a unit row, so as to be integral with another link portion (8) defined at a predetermined interval (S') by widthwisely adjoining unit rows of elongated hole portions (4), a reinforcing plate (11₁) is placed under the back of said main plate, said flanges (5) of said elongated hole portions are welded to said reinforcing plate (11₁) by spot welding, holes (15) are made in four corners and a center portion of said deck board (11) and center portions of individual sides of said deck board between the associated corners, restrictions (15₁) are formed in four corners of said reinforcing plate (11₁), hat-shaped legs (17) are fitted into said restrictions, flanges (17₁) of said legs are welded to said holes (15) of said deck board by spot welding, and a periphery of said deck board is curled downward to form a curl portion (18) to hold said flanges (171) of said legs.

5. The metallic transporting appliance according to claim 1, wherein said main plate (1) constitutes a side plate (12) of a box pallet assembled by connecting said side plate to each peripheral edge of a deck board (11), plural rows of elongated hole portions (4) are arranged on said main plate (1) as said side plate of said box pallet, a link portion (7) is defined at a predetermined interval (S) by each lengthwisely adjoining pair of elongated hole portions (4, 4) in a unit row, so as to be integral with another link portion (8) defined at a predetermined interval (S') by widthwisely adjoining unit rows of elongated hole portions (4), lengthwise extending portions (1₁) of said main plate are bent downward and then bent inward toward each other with a predetermined thickness (t), both end portions (1₂, 1₂) are joined at a center portion, and said flanges (5) of said elongated hole portions are welded to said extending portion (11) by spot welding.

6. The metallic transporting appliance according to claim 1, wherein said main plate (1) and a reinforcing plate (11₁) constitute a deck board (11) of a skid type, plural rows of elongated hole portions (4) are provided in said main plate, plural rows of elongated hole portions (4) are provided in said reinforcing plate (11₁) in a direction perpendicular to said plural rows of elongated hole portions of said main plate, and said flanges (5) of said elongated hole portions of said main plate are welded to the facing reinforcing plate (11₁) by spot welding.
